# EUROPÄISCHE PATENTSCHRIFT

(11) **EP 3 615 432 B1**
(45) Veröffentlichungstag und Bekanntmachung des Hinweises auf die Patenterteilung: **02.06.2021**
(21) Anmeldenummer: 18718765.3
(22) Anmeldetag: 11.04.2018
(51) Int. Cl.: B65B 51/30, B29C 65/02

(54) **VORRICHTUNG ZUM SIEGELN EINER PACKSTOFFBAHN**
DEVICE FOR SEALING A PACKAGING MATERIAL WEB
DISPOSITIF POUR SCELLER UNE BANDE DE MATÉRIAU D'EMBALLAGE

(30) Priorität: 28.04.2017 DE 102017207226
(43) Veröffentlichungstag der Anmeldung: 04.03.2020
(73) Patentinhaber: Syntegon Packaging Systems AG, 8222 Beringen (CH)
(72) Erfinder: EMMRICH, Benjamin, 8255 Schlattingen (CH); SCHWARZ, Daniel, 8476 Unterstammheim (CH); IMHOF, Marcel, 8309 Nürensdorf (CH)
(74) Vertreter: Daub, Thomas
(86) Internationale Anmeldenummer: PCT/EP2018/059224
(87) Internationale Veröffentlichungsnummer: WO 2018/197209

(56) Entgegenhaltungen:
- EP-A1- 1 810 922
- EP-A2- 1 026 078
- EP-A2- 3 023 338
- JP-A- 2015 217 962

## Beschreibung

### Stand der Technik

Die vorliegende Erfindung betrifft eine Vorrichtung zum Siegeln einer Packstoffbahn nach der Gattung des unabhängigen Anspruchs. Eine gattungsgemäße Vorrichtung ist bereits aus der DE 102013217548 A1 bekannt. Dort ist eine Horizontalquersiegelstation insbesondere für eine Schlauchbeutelmaschine gezeigt. Diese beinhaltet zwei Siegelbacken, die synchron von einem Antrieb rotiert werden können. Darüber hinaus kann die Quersiegelstation eine Bewegungskomponente in Transportrichtung ausführen. Da die Länge zwischen zwei Siegelungen oft nicht dem Umfang zwischen den Siegelbacken entspricht, werden die Wellen pro Umdrehung mehrfach verzögert und beschleunigt. Diese Art von Bewegung belastet den Motor stark. Oftmals sind hohe Drehmomente und Beschleunigungen limitierende Faktoren für die gesamte Verpackungsmaschine.

Des Weiteren ist aus der EP 3 023 338 A2 bereits eine Vorrichtung zum Siegeln einer Packstoffbahn bekannt, wobei die Vorrichtung zumindest eine Siegelbacke, die rotierbar um eine Siegelachse einer Siegelwelle ausgebildet ist, und zumindest eine weitere Siegelbacke, die rotierbar um eine weitere Siegelachse einer weiteren Siegelwelle ausgebildet ist, umfasst, wobei die Siegelbacken zum

Siegeln einer Packstoffbahn zusammenwirken, wobei ein Antrieb zum Antrieb der Siegelwelle vorgesehen ist, und wobei ein weiterer Antrieb zum Antrieb der weiteren Siegelwelle vorgesehen ist.

Ferner sind aus der EP 1 026 078 A2, der EP 1 810 922 A1 und der JP 2015 217962 A ebenfalls bereits Vorrichtungen zum Siegeln bekannt.

Der Erfindung liegt die Aufgabe zugrunde, die Ausbringungsleistung und Flexibilität der Vorrichtung weiter zu erhöhen. Diese Aufgabe wird gelöst durch die Merkmale des unabhängigen Anspruchs.

### Vorteile der Erfindung

Die erfindungsgemäße Vorrichtung gemäß den Merkmalen des unabhängigen Anspruchs hat demgegenüber den Vorteil, dass die Massenträgheit der Siegelstation weiter minimiert wird. Durch die erfindungsgemäße Verwendung eines Direktantriebs können die Siegelwellen dynamischer angetrieben bzw. bewegt werden. Dadurch kann der Leistungsbereich erweitert werden, indem entweder die Produktausbringung erhöht wird oder bei gleicher Ausbringung der Formatbereich erweitert wird. Die Flexibilität der Vorrichtung erhöht sich, da die Vorrichtung einfacher an unterschiedliche Produktdimensionen angepasst werden kann. Dadurch erweitert sich der Formatbereich. Erfindungsgemäß werden hierbei zwei Antriebe, pro Siegelwelle ein Antrieb, direkt auf der Siegelwelle ohne Kupplung, Getriebe oder sonstiges Zwischenelement angebracht. Damit entspricht die Siegelwelle der Antriebswelle (Siegelwelle und Antriebswelle sind identisch) bzw. Siegelwelle und Antriebswelle sind koaxial zueinander angeordnet und direkt bzw. unmittelbar miteinander verbunden, ohne Übersetzung, Kupplung, Getriebe oder sonstiges Zwischenelement. Dadurch kann der Leistungsbereich stark vergrößert werden. Ein mechanischer Formatwechsel wird nur bei sehr großen Dimensionsänderungen der zu verpackenden Produkte nötig. Weiter kann das Spiel zwischen oberer und unterer Siegelwelle, was oftmals beim Stand der Technik durch Kupplungs-oder Getriebespiel entsteht, zumindest stark vermindert werden. Weiterhin haben die unabhängigen Drehbewegungen den Vorteil, dass softwaremäßig ein Offset einer oder mehreren Siegelbacken eingegeben werden kann, welcher Fertigungstoleranzen an den Siegelwellen zumindest teilweise kompensieren kann. Damit wird gewährleistet, dass die Siegelbacken hochpräzise aufeinandertreffen. Dies ist insbesondere beim Siegeln mit Querrillung von großer Bedeutung. Eine Querrillung erfordert eine höhere Positioniergenauigkeit, was mithilfe des Direktantriebs erreicht werden kann. Weiterhin können alle elektrischen Komponenten wie der Antrieb, ein Schleifring, ein Encoder etc. auf die Gehäuseseite verlegt werden.

In einer zweckmäßigen Weiterbildung ist eine Hohlwelle als Antriebswelle bzw. Siegelwelle vorgesehen. Über diese Hohlwelle können gehäuseseitig Kabel eingeführt werden, falls eine Widerstandsheizung für eine Heißsiegelung gewünscht wird.

In einer zweckmäßigen Weiterbildung ist vorgesehen, dass zumindest ein Encoder auf der Antriebswelle angeordnet ist. Damit misst der Encoder direkt (ohne Übersetzung und Spiel) die Position der Siegelwelle, da diese der Antriebswelle entspricht bzw. zu dieser koaxial ausgebildet ist. Insbesondere bei einer Verwendung als hochauflösende Absolutgeber können bei der unmittelbaren Montage auf der Welle hochdynamische Bewegungen genau geregelt werden. Dadurch wird das dynamische Verhalten der Siegelstation verbessert sowie die Positionsgenauigkeit der Siegelwelle bzw. zugehörigen Antriebswelle erhöht.

In einer zweckmäßigen Weiterbildung ist zumindest eine Auswerteeinheit vorgesehen zur Auswertung zumindest einer charakteristischen Größe eines der Antriebe und/oder des Encoders. Beispielsweise bei der Erfassung einer Stromkurve des Antriebs könnte über einen Langzeitvergleich der Verschleiß bestimmter Komponenten wie beispielsweise das Messer ermittelt werden. Außerdem kann durch eine Verarbeitung des Schleppfehlers anhand der Positionswerte des Encoders und/oder des Stroms des Antriebs bei einer unerwartet hohen Abweichung vom Normalbetrieb ein Fremdkörper oder ein Produktpartikel zwischen den Siegelbacken festgestellt werden. Dadurch erhöht sich der Betrieb der Vorrichtung weiter, da gezielt Maßnahmen ergriffen werden können, um Ausschuss zu reduzieren. Durch die höhere Genauigkeit kann eine solche Auswertung zuverlässiger gemacht werden.

Weitere zweckmäßige Weiterbildungen ergeben sich aus weiteren abhängigen Ansprüchen und der Beschreibung.

### Zeichnung

Ausführungsbeispiele der erfindungsgemäßen Vorrichtung sind in der Zeichnung dargestellt und werden nachfolgend näher beschrieben.

Es zeigen:
Figur 1 eine schematische Darstellung einer Verpackungsmaschine mit einer Quersiegelstation,
die Figur 2 eine Seitenansicht der Quersiegelstation,
die Figur 3 einen Schnitt durch die Quersiegelstation nach Figur 2 sowie
die Figur 4 ein Blockschaltbild einer Ansteuerung der Antriebe in Abhängigkeit von einer charakteristischen Größe.

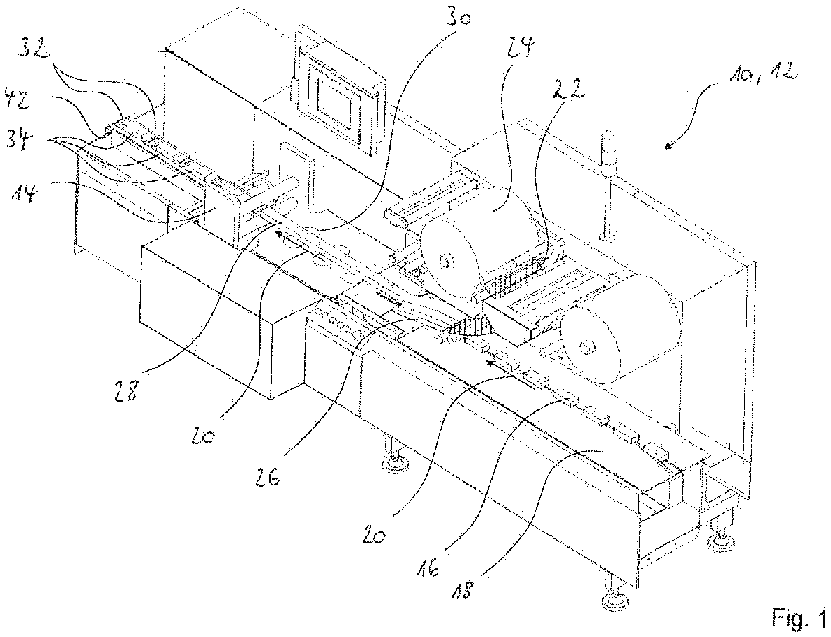

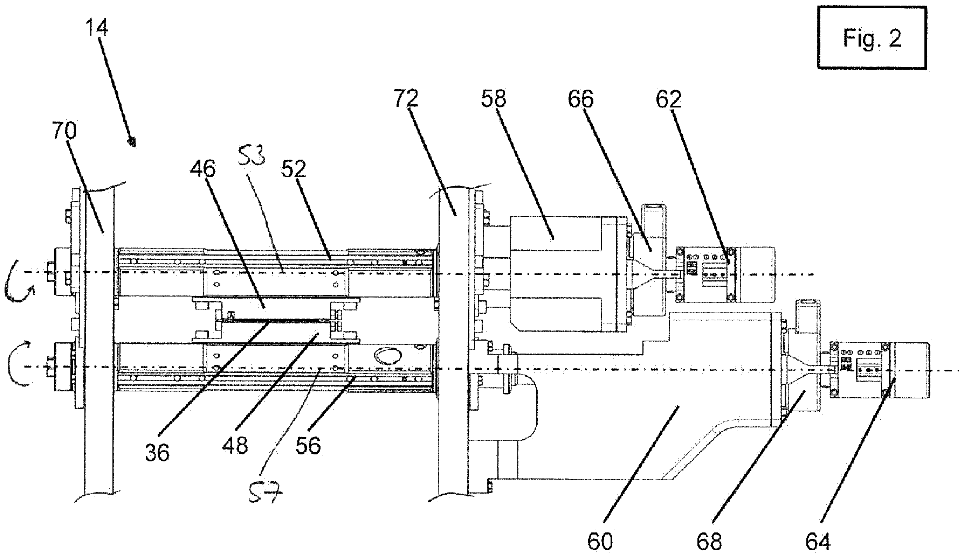

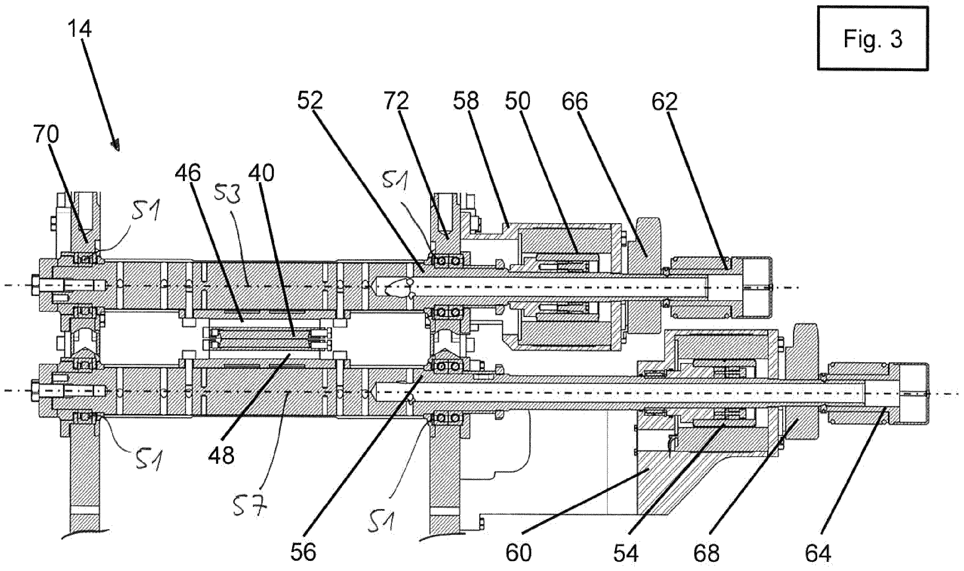

Das Ausführungsbeispiel gemäß Figur 1 zeigt eine als horizontale Schlauchbeutelmaschine 12 ausgebildete Verpackungsmaschine 10 mit einer Quersiegelstation 14. Zu verpackende Produkte 16 werden einbahnig auf einem Zufuhrträger 18 in einer horizontalen Transportrichtung 20 mittels hier nicht näher dargestellter Mitnehmer einer Zufuhrkette zur Quersiegelstation 14 geführt. Eine Packstoffbahn 22 wird von einer Packstoffrolle 24 abgerollt und mithilfe einer hier nur angedeuteten Formschulter 26 um die zu verpackenden Produkte 16 zu einem Folienschlauch 28 umgeformt. Der Folienschlauch 28 wird in der Transportrichtung 20 transportiert und unter den Produkten 16 durch eine Längssiegeleinheit 30 verschlossen. In der Folge verschließt die Quersiegelstation 14 den Folienschlauch 28 entlang von Quersiegelnähten 32 und bildet so verschlossene Packungen 34 mit den Produkten 16. Die Quersiegelstation 14 bildet dabei jeweils gleichzeitig eine in Transportrichtung 20 erste Quersiegelnaht 32 einer in Transportrichtung 20 erste Packung 34 und eine in Transportrichtung 20 zweite Quersiegelnaht 32 einer in Transportrichtung 20 zweiten Packung 34. Gleichzeitig trennt die Quersiegelstation 14 den Folienschlauch 28 mittels eines mittig in Siegelflächen eines Siegelbackenpaars angeordneten Messers 40 (vergleiche Figuren 2 und 3), so dass diese Packung 34 mit zwei Quersiegelnähten 32 verschlossen ist und auf einem Auslaufband 42 aus der Schlauchbeutelmaschine 12 abtransportiert wird.

Gemäß Figur 2 ist die Quersiegelstation 14 in der Seitenansicht näher gezeigt. Die Quersiegelstation 14 umfasst eine erste Siegelbacke 46 mit einer Siegelfläche 36 und daran angeordnetem Messer 40 sowie eine weitere Siegelbacke 48, die parallel zur ersten Siegelbacke 46 angeordnet ist. Beide Siegelbacken 46, 48 rotieren gegenläufig um ihre Siegelachsen 53,57 der Siegelwellen. Als Siegelwelle wird dasjenige rotierende Teil verstanden, an dem die entsprechende Siegelbacke 46,48 angeordnet ist. Im Ausführungsbeispiel sind die Siegelwellen, die um die Siegelachsen 53,57 rotieren, identisch mit den Antriebswellen 52,56. Wesentlich in diesem Zusammenhang jedoch ist, dass die Siegelwellen zumindest koaxial angeordnet zu den sie antreibenden Antriebswellen 52,56 und direkt bzw. unmittelbar miteinander verbunden sind, ohne Übersetzung. In diesem Fall wird von einem sogenannten Direktantrieb gesprochen. Insbesondere sind zwischen einer Antriebswelle 52,56 und der Siegelwelle der Siegelbacken 46,48 kein Getriebe oder Übersetzung vorgesehen. Alternativ könnten die koaxial zu den jeweiligen Antriebswellen 52,56 zueinander ausgerichteten Siegelwellen auch aus einem separaten Teil gefertigt sein, jedoch sind sie mit der jeweiligen Antriebswelle 52,56 direkt verbunden.

Damit wird also unter "direktem" Antrieb der Siegelwelle verstanden, dass die Antriebswelle 52,56 des Antriebs 50, 54 entweder direkt mit der Siegelwelle verbunden ist, ohne dass eine Übersetzung erfolgt, oder dass die Antriebswelle 52,56 der Siegelwelle entspricht, also als identisches Teil ausgeführt ist.

Die erste Siegelbacke 46 wird direkt angetrieben durch eine erste Antriebswelle 52 eines ersten Antriebs 50. Die erste Siegelbacke 46 ist mit der ersten Antriebswelle 52 verbunden. Die weitere Siegelbacke 48 wird direkt angetrieben durch eine weitere Antriebswelle 56 eines weiteren Antriebs 54. Die weitere Siegelbacke 48 ist mit der weiteren Antriebswelle 56 verbunden. An einer Siegelwelle ist zumindest eine Siegelbacke 46,48 angeordnet, je nach Bedarf können aber auch weitere Siegelbacken an dieser Siegelwelle vorgesehen werden.

Die Siegelwellen sind an ihren Enden jeweils gelagert in Lagerschilden 70,72. Die zugehörigen Lager 51 sind im Schnitt gemäß Figur 3 bezeichnet. An der ersten Antriebswelle 52 ist ein erster Encoder 66 zur genauen Positionserfassung angeordnet. An der weiteren Antriebswelle 56 ist ein weiterer Encoder 68 zur genauen Positionserfassung angeordnet. Der Antrieb 50 wird von einem Gehäuse 58 umgeben. Der weitere Antrieb 54 wird von einem weiteren Gehäuse 60 umgeben. Das Ende der ersten Antriebswelle 52 ist mit einem Schleifring 62 verbunden. Das Ende der weiteren Antriebswelle 56 ist mit einem weiteren Schleifring 64 verbunden. Die Schleifringe 62,64 dienen dem Energieeintrag einem Heißsiegeln. Sie sind jedoch nicht zwingend vorgesehen beispielsweise beim Kaltsiegeln.

Aus Platzgründen sind die Antriebe 50,54 jeweils entlang der Siegelachsen 53,57 versetzt zueinander angeordnet. Im Ausführungsbeispiel befindet sich der weitere Antrieb 54 mit zugehörigem Gehäuse 60 zumindest unterhalb des Schleifrings 62. Alternativ könnten die Antriebe 50,54 auch auf gegenüberliegenden Seiten bezogen auf die Siegelbacken 46,48 angeordnet sein. So könnte der eine Antrieb 50 rechts von dem weiteren Lagerschild 72, der weitere Antrieb 54 links von dem Lagerschild 70 angeordnet sein.
Bei dem Schnitt gemäß Figur 3 wird ersichtlich, dass die Antriebswelle 52 einstückig (und somit auch koaxial bzw. direkt verbunden) ausgebildet ist mit der Siegelwelle, an der die Siegelbacke 46 angeordnet ist. So verläuft die Antriebswelle 52 umgeben vom Schleifring 62 durch das Gehäuse 58 hindurch in den Antrieb 50, dann durch das weitere Lagerschild 72 hindurch, aufgenommen im Lager 51 bis in den Bereich der Siegelbacke 46 und abschließend bis durch das Lagerschild 70 hindurch, wiederum aufgenommen durch ein weiteres Lager 51. Auch die weitere Antriebswelle 56 ist einstückig ausgebildet mit der Siegelwelle, an der die weitere Siegelbacke 48 angeordnet ist. Die weitere Antriebswelle 56 läuft ebenfalls vom weiteren Schleifring 64 umgeben durch das weitere Gehäuse 60, den weiteren Antrieb 54, durch das weitere Lagerschild 72 bis in durch das Lagerschild 70, jeweils in den Lagerschilden 70,72 durch Lager 51 aufgenommen.

Zumindest eine, vorzugsweise zwei der Antriebswellen 52,56 können als Hohlwelle ausgebildet sein. Über eine solche Hohlwelle können gehäuseseitig Kabel eingeführt werden, falls eine Beheizung der Siegelbacken 46,48 gewünscht ist. Die hochauflösenden Absolutgeber, die Encoder 66,68 sind direkt auf der Antriebswelle 52,54 montiert. Dadurch kann eine hochdynamische Bewegung ideal geregelt werden. Die Antriebe 50,54 können unabhängig voneinander verfahren werden. Dadurch lassen sich bestimmte Ausgleichsvorgänge, die beispielsweise durch ungleiche Geometrie in der Siegelbacken 46,48 herrühren können, durch eine einfache Ansteuerung der Antriebe beispielsweise im Rahmen eines Offsetausgleichs, erreichen.

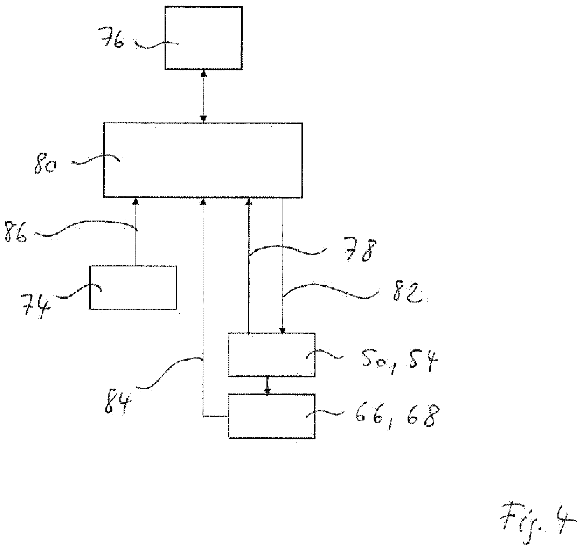

In Figur 4 ist ein Blockschaltbild einer möglichen Ansteuerung gezeigt. Hierbei ist eine Auswerteeinheit 80 vorgesehen, die mehrere charakteristische Größen der Antriebe 50,54 erfasst. Ebenfalls erhält die Auswerteeinheit 80 Antriebsgrößen 78 der jeweiligen Antriebe 50,54. Bei den Antriebsgrößen 78 handelt es sich beispielsweise um Strom und/oder Temperatur des jeweiligen Antriebs 50,54. Der Strom des jeweiligen Antriebs 50,54 entspricht dem zugehörigen Antriebsmoment. Optional oder standardmäßig ist zumindest ein Sensor 74 vorgesehen, der weitere interessierende Informationen der Auswerteeinheit 80 zuführt. Die Auswerteeinheit 80 tauscht Informationen aus mit einem sogenannten HMI (Human-Machine-Interface) 76. Das HMI 76 zeigt dem Benutzer bestimmte Informationen an und erlaubt dem Benutzer zudem, Einfluss auf die Auswerteeinheit 80 zu nehmen, beispielsweise die Vorgabe bestimmter Parameter etc. Weiterhin erhält die Auswerteeinheit 80 Positionsinformationen 84 der Encoder 66, 68. Damit kann mit hoher Genauigkeit die aktuelle Position der jeweiligen Antriebswelle 52,56 ermittelt werden. Die Positionsinformationen 84 dienen beispielsweise einer Positionsregelung bzw. Schleppfehleroptimierung, wie in der Auswerteeinheit 80 durchgeführt. Die Auswerteeinheit 80 ist beispielsweise als Steuerung oder Regelung für den jeweiligen Antrieb 50,54 ausgebildet und gibt entsprechende Ansteuerungssignale 82 an die Antriebe 50,54 ab. Durch die Auswerteeinheit 80 erfolgt beispielsweise eine unmittelbare Erfassung und Ermittlung der für den Siegelvorgang notwendigen Kraft in Abhängigkeit von der charakteristischen Größe. Hierzu könnten je nach Bedarf entsprechende Sensoren 74 und deren Sensordaten 86 verwendet werden.

Die Auswerteeinheit 80 könnte die Antriebsgrößen 78 auch über einen längeren Zeitraum erfassen, beispielsweise in Form von Stromkurven. Insbesondere über einen Langzeitvergleich dieser Stromkurven kann beispielsweise der Verschleiß des Messers 40 oder anderer Komponenten gemessen bzw. ermittelt werden.

Durch Verarbeiten des Schleppfehlers (mittels Positionsinformationen 84 vom Encoder 66,68 zur Verfügung gestellt und/oder des Stroms (als Maß für die aktuelle Kraftaufbringung)) können Fremdkörper bzw. Produktpartikel zwischen den Siegelbacken 46,48 festgestellt werden. Es können gezielt Maßnahmen ergriffen werden, wenn kritische Betriebssituationen festgestellt werden. Beispielsweise könnten Produkte 16 ausgeschleust werden, da unter Umständen die Siegelqualität beeinträchtigt wird.

Es sind auch weitere alternative Ausführungsbeispiele möglich, die nicht in den Figuren gezeigt sind. So wäre es möglich, dass zumindest zwei Direktantriebe pro Siegelachse vorgesehen sind, welche je eine konzentrische Siegelwelle antreiben pro Siegelachse (jede der zumindest zwei Siegelbacken pro Siegelachse kann hierbei separat angetrieben werden, beispielsweise bei einem sogenannten Zweiflügler (beispielsweise zwei Backen pro Siegelwelle).

Die Vorrichtung zum Siegeln von Packstoff wird insbesondere in der Verpackungstechnik eingesetzt. Die Verwendung ist hierauf jedoch nicht eingeschränkt.

## Patentansprüche

1. Vorrichtung zum Siegeln einer Packstoffbahn, umfassend zumindest eine Siegelbacke (46), die rotierbar um eine Siegelachse (53) einer Siegelwelle ausgebildet ist, und zumindest eine weitere Siegelbacke (48), die rotierbar um eine weitere Siegelachse (57) einer weiteren Siegelwelle ausgebildet ist, wobei die Siegelbacken (46,48) zum Siegeln einer Packstoffbahn (22) zusammenwirken, wobei zumindest ein Antrieb (50) zum direkten Antrieb der Siegelwelle vorgesehen ist, dessen Antriebswelle (52) koaxial zur Siegelachse (53) angeordnet ist, und wobei zumindest ein weiterer Antrieb (54) zum direkten Antrieb der weiteren Siegelwelle vorgesehen ist, dessen Antriebswelle (54) koaxial zur weiteren Siegelachse (57) angeordnet ist.

2. Vorrichtung nach Anspruch 1, **dadurch gekennzeichnet, dass** die Siegelwelle der Antriebswelle (52) entspricht und/oder die weitere Siegelwelle der Antriebswelle (54) des weiteren Antriebs (54) entspricht.

3. Vorrichtung nach einem der vorhergehenden Ansprüche, **dadurch gekennzeichnet, dass** der Antrieb (50) mit der Siegelwelle direkt verbunden ist, insbesondere ohne Zwischenschaltung zumindest eines eine Übersetzung bewirkenden Elements, insbesondere Getriebe oder sonstige Umsetzung.

4. Vorrichtung nach einem der vorhergehenden Ansprüche, **dadurch gekennzeichnet, dass** zumindest ein Encoder (66,68) auf zumindest einer der Antriebswellen (52,56), die der Siegelwelle entspricht, angeordnet ist.

5. Vorrichtung nach einem der vorhergehenden Ansprüche, **dadurch gekennzeichnet, dass** die Antriebswelle (52,56) und/oder Siegelwelle als Hohlwelle ausgebildet ist.

6. Vorrichtung nach einem der vorhergehenden Ansprüche, **dadurch gekennzeichnet, dass** zumindest eine Auswerteeinheit (80) vorgesehen ist zur Auswertung zumindest einer charakteristischen Größe (78, 84), vorzugsweise ein Antriebsstrom und/oder eine Temperatur und/oder eine Positionsinformation zumindest eines der Antriebe (50,54) und/oder des Encoders (66,68).

7. Vorrichtung nach einem der vorhergehenden Ansprüche, **dadurch gekennzeichnet, dass** die Auswerteeinheit (80) zumindest einen der Antriebe (50,54) in Abhängigkeit von der charakteristischen Größe (78, 84) ansteuert.

8. Vorrichtung nach einem der vorhergehenden Ansprüche, **dadurch gekennzeichnet, dass** die Auswerteeinheit (80) in Abhängigkeit von der charakteristischen Größe eine Ausgabemittel (74) ansteuert, insbesondere zur Anzeige eines Qualitätsmerkmals der Vorrichtung bzw. deren Komponenten wie beispielsweise ein Messer (40).

9. Vorrichtung nach einem der vorhergehenden Ansprüche, **dadurch gekennzeichnet, dass** die Auswerteeinheit (80) in Abhängigkeit von der charakteristischen Größe (78,84) einen Verschleiß eines an zumindest einer Siegelbacke (46,48) angeordneten Messers (40) ermittelt.

10. Vorrichtung nach einem der vorhergehenden Ansprüche, **dadurch gekennzeichnet, dass** zumindest zwei Antriebe für jeweils eine Siegelachse vorgesehen sind zum Antrieb zumindest zweier Siegelbacken, welche um die Siegelachse rotierbar sind.

11. Vorrichtung nach einem der vorhergehenden Ansprüche, **dadurch gekennzeichnet, dass** zumindest ein Schleifring (62,64) mit zumindest einer der Antriebswellen (52,56) verbunden ist.

12. Vorrichtung nach einem der vorhergehenden Ansprüche, **dadurch gekennzeichnet, dass** zumindest ein Lagerschild (70,72) vorgesehen ist, in der zumindest eine der Antriebswellen (52,56) und/oder zumindest eine der Siegelwellen gelagert ist.

13. Schlauchbeutelmaschine (12) mit einer Vorrichtung nach einem der vorhergehenden Ansprüche.

## Claims

1. Device for sealing a packaging material web, comprising
at least one sealing jaw (46), which is implemented to be rotatable around a sealing axis (53) of a sealing shaft, and
at least one further sealing jaw (48), which is implemented to be rotatable around a further sealing axis (57) of a further sealing shaft,
wherein the sealing jaws (46, 48) cooperate for a sealing of a packaging material web (22),
wherein at least one drive (50) is configured for directly driving the sealing shaft, a drive shaft (52) of the drive (50) being arranged coaxially with the sealing axis (53), and
wherein at least one further drive (54) is configured for directly driving the further sealing shaft, a drive shaft (54) of the further drive (54) being arranged coaxially with the further sealing axis (57).

2. Device according to claim 1,
**characterised in that** the sealing shaft corresponds to the drive shaft (52) and/or the further sealing shaft corresponds to the drive shaft (54) of the further drive (54).

3. Device according to one of the preceding claims,
**characterised in that** the drive (50) is directly connected with the sealing shaft, in particular without intercalation of at least one element effecting a transmission, in particular a gear box or other transmission.

4. Device according to one of the preceding claims,
**characterised in that** at least one encoder (66, 68) is arranged on at least one of the drive shafts (52, 56) which corresponds to the sealing shaft.

5. Device according to one of the preceding claims,
**characterised in that** the drive shaft (52, 56) and/or sealing shaft is embodied as a hollow shaft.

6. Device according to one of the preceding claims,
**characterised in that** at least one evaluation unit (80) is configured for an evaluation of at least one characteristic parameter (78, 84), preferably a drive current and/or a temperature and/or a position information of at least one of the drives (50, 54) and/or of the encoder (66, 68).

7. Device according to one of the preceding claims,
**characterised in that** the evaluation unit (80) actuates at least one of the drives (50, 54) depending on the characteristic parameter (78, 84).

8. Device according to one of the preceding claims,
**characterised in that** the evaluation unit (80) actuates an output means (74) depending on the characteristic parameter, in particular for an indication of a quality characteristic of the device and/or of its components, like for example a blade (40).

9. Device according to one of the preceding claims,
**characterised in that** the evaluation unit (80) determines a wear of a blade (40) that is arranged on at least one sealing jaw (46, 48), depending on the characteristic parameter (78, 84).

10. Device according to one of the preceding claims,
**characterised in that** at least two drives are provided for respectively one sealing axis, for the purpose of driving at least two sealing jaws, which are rotatable around the sealing axis.

11. Device according to one of the preceding claims,
**characterised in that** at least one friction ring (62, 64) is connected with at least one of the drive shafts (52, 56).

12. Device according to one of the preceding claims,
**characterised in that** at least one bearing shield (70, 72) is provided, in which at least one of the drive shafts (52, 56) and/or at least one of the sealing shafts are/is supported.

13. Tubular bag machine (12) with a device according to one of the preceding claims.

## Revendications

1. Dispositif pour sceller une bande de matériau d'emballage, comprenant
au moins une mâchoire de scellement (46) réalisée de telle manière qu'elle soit tournable autour d'un axe de scellement (53) d'un arbre de scellement, et
au moins une mâchoire de scellement de plus (48) réalisée de telle manière qu'elle soit tournable autour d'un axe de scellement de plus (57) d'un arbre de scellement de plus,
oú les mâchoires de scellement (46, 48) agissent conjointement pour sceller une bande de matériau d'emballage (22),
où au moins un entraînement (50) est prévu pour un entraînement direct de l'arbre de scellement, l'arbre d'entraînement (52) de l'entraînement (50) étant disposé coaxialement avec l'axe de scellement (53), et
où au moins un entraînement de plus (54) est configuré pour l'entraînement direct de l'arbre de scellement de plus, l'arbre d'entraînement (54) de l'entraînement de plus étant disposé coaxialement avec l'axe de scellement de plus (57).

2. Dispositif selon la revendication 1,
**caractérisé en ce que** l'arbre de scellement correspond à l'arbre d'entraînement (52) et/ou l'arbre de scellement de plus correspond à l'arbre d'entraînement (54) de l'entraînement de plus (54).

3. Dispositif selon l'une des revendications précédentes,
**caractérisé en ce que** l'entraînement (50) est directement raccordé à l'arbre de scellement, en particulier sans intercalage d'au moins un élément effectuant une transmission, notamment une boîte de vitesses ou autre transmission.

4. Dispositif selon l'une des revendications précédentes,
**caractérisé en ce qu'au** moins un encodeur (66, 68) est disposé sur au moins l'un des arbres d'entraînement (52, 56) qui correspond à l'arbre de scellement.

5. Dispositif selon l'une des revendications précédentes,
**caractérisé en ce que** l'arbre d'entraînement (52, 56) et/ou l'arbre de scellement sont/est réalisé comme arbre creux.

6. Dispositif selon l'une des revendications précédentes,
**caractérisé en ce qu'au** moins une unité d'évaluation (80) est prévue pour une évaluation d'au moins un paramètre caractéristique (78, 84), préférablement un courant d'entraînement et/ou une température et/ou une information de position d'au moins un des entraînements (50, 54) et/ou de l'encodeur (66, 68).

7. Dispositif selon l'une des revendications précédentes,
**caractérisé en ce que** l'unité d'évaluation (80) actionne au moins un des entraînements (50, 54) en fonction du paramètre caractéristique (78, 84).

8. Dispositif selon l'une des revendications précédentes,
**caractérisé en ce que** l'unité d'évaluation (80) actionne un moyen d'output (74) en fonction du paramètre caractéristique, en particulier pour l'affiche d'une caractéristique de qualité du dispositif et/ou de ses composants, par exemple une lame (40).

9. Dispositif selon l'une des revendications précédentes,
**caractérisé en ce que** l'unité d'évaluation (80) détermine, en fonction du paramètre caractéristique (78, 84), une usure d'une lame (40) disposée sur au moins une mâchoire de scellement (46, 48).

10. Dispositif selon l'une des revendications précédentes,
**caractérisé en ce qu'**au moins deux entraînements sont pourvus pour respectivement un arbre de scellement, pour l'entraînement d'au moins deux mâchoires de scellement qui sont tournables autour de l'axe de scellement.

11. Dispositif selon l'une des revendications précédentes,
**caractérisé en ce qu'**au moins une bague de frottement (62, 64) est raccordée à au moins un des arbres d'entraînement (52, 56).

12. Dispositif selon l'une des revendications précédentes,
**caractérisé en ce qu'**au moins un flasque-palier (70, 72) est pourvu, dans lequel au moins un des arbres d'entraînement (52, 56) et/ou au moins un des arbres de scellement sont/est supportés/supporté.

13. Machine à sacs tubulaires (12) avec un dispositif selon l'une des revendications précédentes.
